# EUROPÄISCHE PATENTSCHRIFT

(11) **EP 2 896 865 B1**
(45) Veröffentlichungstag und Bekanntmachung des Hinweises auf die Patenterteilung: **23.11.2016**
(21) Anmeldenummer: 15151405.6
(22) Anmeldetag: 16.01.2015
(51) Int. Cl.: F16L 37/10, F16L 37/42, F16L 37/23, F16L 37/44

(54) **ZUFÜHRANSCHLUSSTEIL SOWIE STECKANSCHLUSS**
SUPPLY SOCKET PART AND PLUG CONNECTION
PIÈCE DE RACCORDEMENT D'ALIMENTATION ET RACCORDEMENT ENFICHABLE

(30) Priorität: 17.01.2014 DE 202014100200 U
(43) Veröffentlichungstag der Anmeldung: 22.07.2015
(73) Patentinhaber: Lothar Schulz - Mechanik GmbH, 66450 Bexbach (DE)
(72) Erfinder: Kees, Ulrich, 66424 Homburg (DE)
(74) Vertreter: Wieske, Thilo

(56) Entgegenhaltungen:
- DE-A1-102007 062 393
- DE-U1-202012 008 767
- NL-C1- 1 006 805
- US-A- 2 800 343

## Beschreibung

Die vorliegende Erfindung betrifft ein Zuführanschlussteil nach dem Oberbegriff des Anspruchs 1.

Die DE 10 2007 062393 A1 offenbart den Oberbegriff von Anspruch 1. Ein ähnliches Zufüranschlussteil offenbart die DE 20 2012 008767 U1.

Im Bereich der pneumatischen Antriebe ist es bekannt, beispielsweise in Werkhallen von Betrieben eine pneumatische Versorgungsleitung vorzusehen, die als Stammleitung geführt ist. Von dieser Stammleitung gehen Stichleitungen zu den einzelnen Arbeitsplätzen ab. Am Ende dieser Stichleitungen sind an den Arbeitsplätzen jeweils Zuführanschlussteile angebracht. Diese Zuführanschlussteile weisen ein Aufnahmeteil auf für ein Gegenanschlussteil. Dieses Gegenanschlussteil ist ein pneumatischer Stecker, der an einer zu einem pneumatischen Verbraucher führenden Leitung angeschlossen ist. Mittels dieses Gegenanschlussteils wird der pneumatische Verbraucher durch ein Einstecken in das Zuführanschlussteil mit der pneumatischen Versorgungsleitung verbunden.

Die Gegenanschlussteile der Verbraucher sind so ausgeführt, dass diese ein Rohrstück aufweisen, das an seiner Außenfläche eine ringförmige Nut aufweist, in die mechanische Blockademittel eingreifen können zur mechanischen Halterung des Gegenanschlussteils.

Die heute verbreiteten Zuführanschlussteile sind so aufgebaut, dass diese ein Rückschlagventil aufweisen. Durch dieses Rückschlagventil wird die pneumatische Versorgungsleitung gesperrt, wenn kein Gegenanschlussteil in die Aufnahmemittel des Zuführanschlussteils eingesteckt ist. Dabei wird das Gegenanschlussteil direkt in der Bewegungsrichtung des Rückschlagventils gedrückt.

Der vorliegenden Erfindung liegt die Aufgabe zu Grunde, die Handhabung des Anschlusses pneumatischer Verbraucher an eine Versorgungsleitung zu vereinfachen.

Anspruch 1 betrifft ein Zuführanschlussteil, das mit einem Gegenanschlussteil zusammenwirkt. Zur Erläuterung wird auch auf den nachfolgenden Anspruch 2 verwiesen, in dem beschrieben ist, wie dieses Zuführanschlussteil mit einem Gegenanschlussteil zusammenwirkt, um einen Steckanschluss zu bilden. Im Unterschied zu Anspruch 2 ist beim Anspruch 1 nicht der Steckanschluss insgesamt dargestellt sondern lediglich das Zuführanschlussteil als selbständig handelbares Produkt, auch wenn dies zum Zusammenwirken mit einem Gegenanschlussteil vorgesehen ist.

Gemäß Anspruch 1 weist das Zuführanschlussteil Verbindungsmittel auf zur Verbindung des Zuführanschlussteils mit einer Zuführvorrichtung für gasförmige Medien. Weiterhin weist das Zuführanschlussteil ein Rückschlagventil auf, durch das das Zuführanschlussteil gegen ein Entweichen eines gasförmigen Mediums aus dem Zuführanschlussteil abdichtend schließbar ist. Außerdem weist das Zuführanschlussteil Aufnahmemittel auf zur Aufnahme eines Gegenanschlussteils. Dem Zuführanschlussteil ist wenigstens ein Betätigungselement zugeordnet, wobei in einer ersten Position des wenigstens einen Betätigungselementes Blockademittel der Aufnahmemittel des Zuführanschlussteils ein mechanisches Lösen eines in die Aufnahmemittel eingesetzten Gegenanschlussteils verhindern. Weiterhin ist in dieser ersten Position das Rückschlagventil durch das Gegenanschlussteil entgegen der Federkraft des Rückschlagventils sowie entgegen dem in dem Zuführanschlussteil anstehenden Druck des gasförmigen Mediums geöffnet. In einer zweiten Position sind die Blockademittel der Aufnahmemittel gelöst.

Erfindungsgemäß ist gemäß Anspruch 1 das Betätigungselement beim Übergang von der ersten Position in die zweite Position in Form einer Drehbewegung betätigbar, wobei durch diese Drehbewegung des Betätigungselementes in Form einer Zwangsführung das Gegenanschlussteil bewegt wird.

Außerdem weist das Betätigungselement eine Zwischenposition auf, in der das Rückschlagventil geschlossen ist. In dieser Zwischenposition verhindern weiterhin die Blockademittel der Aufnahmemittel des Zuführanschlussteils ein mechanisches Lösen eines in die Aufnahmemittel eingesetzten Gegenanschlussteils. Außerdem ist in dieser Zwischenposition ein in die Aufnahmemittel eingesetztes Gegenanschlussteil mit der umgebenden Atmosphäre verbunden.

Durch die Drehbewegung des Betätigungselementes und die zwangsweise Mitbewegung des Gegenanschlussteils beim Einführen in das Zuführanschlussteil und die damit verbundene Öffnung des Rückschlagventils ergibt sich vorteilhaft, dass der Kraftaufwand beim Einbringen des Gegenanschlussteils in das Zuführanschlussteil deutlich reduziert werden kann. Durch die Drehbewegung lässt sich die Fortbewegung des Gegenanschlussteils als Schraubenlinie darstellen. Die Steigung der Schraubenlinie bestimmt, welcher Kraftaufwand erforderlich ist, um das Gegenanschlussteil einzubringen. Bei einer geringen Steigung ist der Kraftaufwand geringer, wobei allerdings eine Drehung um einen größeren Drehwinkel erforderlich ist. Bei der größeren Steigung ist zwar ein größerer Kraftaufwand erforderlich, allerdings ist auch nur eine Drehung um einen geringeren Drehwinkel erforderlich, um eine Bewegung des Gegenanschlussteils in der Längsrichtung für eine bestimmte Strecke zu erreichen.

Durch die Drehbewegung des Betätigungselementes muss beim Einstecken eines Gegenanschlussteils in die Aufnahmemittel des Zuführanschlussteils das Gegenanschlussteil nicht mehr - wie bei dem bekannten und verbreiteten Stand der Technik - gegen den auf dem Rückschlagventil anstehenden Druck der pneumatischen Versorgungsleitung geöffnet werden, indem das Gegenanschlussteil direkt und ohne weitere Übersetzung in Öffnungsrichtung des Rückschlagventils geschoben werden muss. Dies erfordert eine vergleichsweise große Kraft bereits bei Leitungsquerschnitten von ½" (0,635 cm).

Bei noch größeren Leitungsquerschnitten ist es bei dem bisher bekannten und verbreiteten Stand der Technik durchaus üblich, vor dem Zuführanschlussteil nochmals einen Kugelhahn vorzusehen, über den zum einen die pneumatische Versorgungsleitung auf dem Teilstück zwischen dem Kugelhahn und dem Zuführanschlussteil von der pneumatischen Versorgung getrennt werden kann. Weiterhin ist ein Entlüftungsventil vorhanden zur Entlüftung dieses genannten Teilstücks. Durch das Entlüften wird das Einsetzen des Gegenanschlussteils in die Aufnahmemittel des Zuführanschlussteils erleichtert. Nach dem Anschluss des Gegenanschlussteils wird bei geschlossenem Entlüftungsventil der Kugelhahn wieder geöffnet, so dass der pneumatische Systemdruck dann an dem Verbraucher ansteht.

Vorteilhaft kann mit der vorliegenden Erfindung dieses separate Kugelventil eingespart werden, weil das Ankoppeln und auch das Abkoppeln mit entsprechend reduziertem Kraftaufwand möglich wird.

Bei den bekannten pneumatischen Anschlüssen ergibt sich ein weiteres Problem beim Lösen des Gegenanschlussteils von dem Zuführanschlussteil. Bei noch anstehendem pneumatischem Druck in der Versorgungsleitung zum pneumatischen Verbraucher vom Steckanschluss zum pneumatischen Verbraucher erfolgt beim mechanischen Lösen des Gegenanschlussteils vom Zuführanschlussteil ein Effekt, der als "Peitschenknall" bezeichnet wird. Da das Gegenanschlussteil mechanisch von dem Zuführanschlussteil gelöst ist, wird dieses durch den noch anstehenden pneumatischen Druck in der Leitung zum pneumatischen Verbraucher schlagartig abgedrückt. Um zu verhindern, dass das Gegenanschlussteil in Folge unkontrollierter Bewegung durch dieses Abdrücken eventuell umstehende Personen verletzt, muss dieses beim mechanischen Lösen konzentriert und mit vergleichsweise großer Kraft festgehalten werden.

Das Gegenanschlussteil wird bei dem bekannten und verbreiteten Stand der Technik mechanisch von dem Zuführanschlussteil gehalten, indem mittels eines verschiebbaren Betätigungselementes Blockierelemente gehalten bzw. gelöst werden, die in die ringförmige Nut des Gegenanschlussteils eingreifen. Dieses Betätigungselement ist an dem Zuführanschlussteil angebracht. Da wegen des Effektes des "Peitschenknalls" - wie beschrieben - das Gegenanschlussstück sicher festgehalten werden muss, ist ein sicheres Lösen dieser Verbindung nur möglich, wenn beide Hände benutzt werden.

Durch die vorliegende Erfindung mit der Zwischenposition wird die Handhabung wesentlich vereinfacht und auch die Sicherheit verbessert. In der Zwischenposition wird das Gegenanschlussteil nach wie vor mechanisch sicher gehalten. Gleichzeitig ist die Verbraucherleitung von dem Steckanschluss zum pneumatischen Verbraucher in dieser Zwischenposition mit der umgebenden Atmosphäre verbunden. Ein noch vorhandener Überdruck in dieser Leitung wird daher in dieser Zwischenposition entspannt. Wenn anschließend das Betätigungselement aus der Zwischenposition in die zweite Position bewegt wird, ergibt sich vorteilhaft, dass der Überdruck bereits abgebaut ist, so dass der Effekt des "Peitschenknalls" nicht mehr auftritt.

Im praktischen Betrieb ergibt sich noch ein weiterer Vorteil durch diese definierte Zwischenposition. Bei einem längeren Nichtgebrauch des pneumatischen Verbrauchers kann die pneumatische Versorgungsleitung gesperrt und die Versorgungsleitung zwischen dem Gegenanschlussteil und dem pneumatischen Verbraucher entlüftet werden, wobei gleichzeitig das Gegenanschlussteil mechanisch fest gehalten in dem Zuführanschlussteil verbleiben kann. Dies gilt zumindest so lange kein anderer pneumatischer Verbraucher an das Zuführanschlussteil angeschlossen werden soll.

Dies erweist sich insofern als vorteilhaft, weil das Gegenanschlussteil dann nicht frei herumhängt und wieder verwahrt werden muss. Da das Gegenanschlussteil formschlüssig mit dem Zuführanschlussteil zusammenwirken muss, müssen Beschädigungen an der Oberfläche des Gegenanschlussteils vermieden werden. Dies erweist sich aber als problematisch, wenn das Gegenanschlussteil frei wird nach dem Trennen des pneumatischen Verbrauchers von der pneumatischen Versorgungsleitung (wie dies bei der verbreiteten Lösung nach dem Stand der Technik der Fall ist). Demgegenüber erweist es sich als vorteilhaft, wenn das Gegenanschlussteil in dem Zuführanschlussteil verbleibt, auch wenn der Verbraucher pneumatisch getrennt ist.

Diese Möglichkeit der Entlüftung pneumatischer Verbraucher, wenn diese für eine bestimmte Zeit nicht in Betrieb genommen werden, erweist sich auch insofern als vorteilhaft, weil eine eventuelle negative Beeinflussung von pneumatischen Steuerungen und Stellantrieben durch angeschlossene, aber nicht benötigte Verbraucher vermieden werden kann. Dabei verbleibt wie ausgeführt das Gegenanschlussteil in dem Zuführanschlussteil.

Die Zuführvorrichtung zum Zuführanschlussteil kann beispielsweise bei einer pneumatischen Energieversorgung aus der eingangs beschriebenen Stammleitung mit den Stichleitungen bestehen. Ebenso kann die Zuführvorrichtung aus einem Druckluftspeicher bestehen oder einem Kompressor, an die das Zuführanschlussteil dann angeschlossen wird.

Durch den Anspruch 1 wird damit ein Zuführanschlussteil beschrieben und beansprucht, das in Kombination mit den derzeit auf dem Markt befindlichen Gegenanschlussteilen zur Verwendung vorgesehen ist. Dies erweist sich als vorteilhaft, weil bei Betrieben mit vergleichsweise vielen pneumatischen Verbrauchern und damit mit einer entsprechenden Vielzahl bereits vorhandener Gegenanschlussteile keine Umrüstung dieser vorhandenen Elemente erfolgen muss. Vielmehr ist das Zuführanschlussteil so ausgelegt, dass dieses die bereits vorhandenen Gegenanschlussteile über die Blockademittel der Aufnahmemittel mechanisch halten kann und gleichzeitig in den entsprechenden Positionen des wenigstens einen Betätigungselementes die beschriebenen pneumatischen Verbindungen herstellt.

Anspruch 2 betrifft einen Steckanschluss, wobei das Zuführanschlussteil mit einem kompatiblen Gegenanschlussteil den Steckanschluss bildet, wobei das Zuführanschlussteil und das Gegenanschlussteil zur Ausbildung des Steckanschlusses miteinander verbindbar sind. Es geht dabei um einen pneumatischen Steckanschluss. Das Zuführanschlussteil weist ein Rückschlagventil auf. Dieses Rückschlagventil ist in einer ersten Position derart geöffnet, dass ein gasförmiges Medium durch den Steckanschluss förderbar ist. Weiterhin sind in dieser ersten Position das Zuführanschlussteil und das kompatible Gegenanschlussteil form- und/oder kraftschlüssig miteinander verbunden.

Dies entspricht dem bekannten und verbreiteten Stand der Technik, wenn der Stecker des pneumatischen Verbrauchers eingesteckt ist.

Der aus dem Zuführanschlussteil und dem Gegenanschlussteil bestehende Steckanschluss weist eine zweite Position auf, bei der das Rückschlagventil und damit der Zuführanschluss des gasförmigen Mediums gesperrt sind und bei der das Gegenanschlussteil von dem Zuführanschlussteil gelöst ist.

Dies entspricht bei dem bekannten und verbreiteten Stand der Technik der Situation, bei der der Stecker des pneumatischen Verbrauchers entnommen ist.

Das Rückschlagventil wird beim Einführen des Gegenanschlussteils in das Zuführanschlussteil aus der geschlossenen Stellung in die geöffnete Stellung gebracht.

Dazu ist ein Betätigungselement vorhanden, das derart geführt ist, dass nach dem Einführen des Gegenanschlussteils in das Zuführanschlussteil das Betätigungselement in einer Drehbewegung des Betätigungselementes das Gegenschlussteil weiterführt in Richtung einer Öffnung des Steckanschlusses.

Weiterhin ist eine Zwischenposition zwischen der ersten Position und der zweiten Position vorhanden, in der der Zuführanschluss des gasförmigen Mediums gesperrt ist und in der das

Gegenanschlussteil gegenüber der umgebenden Atmosphäre geöffnet ist. Das Zuführanschlussteil und das Gegenanschlussteil sind in dieser Zwischenposition form- und/oder kraftschlüssig miteinander verbunden.

Bei der Ausgestaltung nach Anspruch 3 ist die Drehrichtung der Drehbewegung des wenigstens einen Betätigungselementes von der ersten Position zur Zwischenposition unterschiedlich zur Drehrichtung der Drehbewegung des wenigstens einen Betätigungselementes von der Zwischenposition zur zweiten Position.

Dadurch wird für den Benutzer in einfacher Weise spürbar, ob er das Betätigungselement in einer Richtung bewegt, die dem Übergang von der ersten Position in die Zwischenposition entspricht oder die dem Übergang von der Zwischenposition in die zweite Position entspricht.

Umgekehrt gilt dasselbe natürlich auch beim Einsetzen des Gegenanschlussteils. Für den Benutzer wird in diesem Fall spürbar, ob er das Betätigungselement dreht vom Übergang von der zweiten Position in die Zwischenposition oder zum Übergang von der Zwischenposition in die erste Position.

Diese Umkehr der Drehrichtungen hat auch den Vorteil, dass sich in der Bewegung beim Erreichen der Zwischenposition ein "Anschlag" ausbildet.

Dies erweist sich insofern als vorteilhaft, weil der Benutzer dann nicht bei der Drehbewegung durch eine Drehung mit einer entsprechend großen Kraft diese Zwischenposition "überdrehen" kann. Dadurch wird vorteilhaft erreicht, dass das Betätigungselement lange genug in der Zwischenposition verbleibt, um unter üblichen Bedingungen den Abbau des Überdrucks zu erreichen.

Gemäß Anspruch 4 wird das Betätigungselement in der ersten Position, der Zwischenposition und/oder der zweiten Position metastabil gehalten.

Dies kann beispielsweise realisiert werden, indem die Kopplung der Bewegung des Gegenanschlussteils an die Drehbewegung des Betätigungselementes in der jeweiligen Position ein "Plateau" aufweist. Das bedeutet, dass in dieser Position eine Drehung des Betätigungselementes keine Bewegung des Gegenanschlussteils in axialer Richtung verursacht.

Bei einer Führung des Betätigungselementes durch einen Führungsstift, der in einer Schraubenlinie geführt ist, bedeutet dies, dass die Schraubenlinie in den jeweiligen Position derart abgeändert ist, dass dort die Führung des Führungsstiftes so erfolgt, dass dieser bei einer Drehung nicht in Längsrichtung der Drehachse bewegt wird.

Bei der Ausgestaltung nach Anspruch 5 wird das Betätigungselement in der ersten Position, der Zwischenposition und/oder der zweiten Position formschlüssig gehalten.

Dies bringt den Vorteil mit sich, dass zunächst ein gewisser Kraftaufwand erforderlich ist, um das Betätigungselement aus dieser formschlüssigen Halterung heraus zu bewegen. Um das Betätigungselement aus dieser Position heraus zu bewegen, ist es erforderlich, das Betätigungselement zunächst gegen diesen Druck aus der formschlüssigen Halterung heraus zu bewegen, bevor sich das Betätigungselement drehen lässt.

Damit kann vorteilhaft vermieden werden, dass das Betätigungselement unbeabsichtigt verstellt wird, wie dies möglich wäre, wenn dieses aus der jeweiligen Position heraus mit einer sehr geringen Kraft bewegt werden kann.

Gegebenenfalls können die entsprechenden Positionen noch durch optische Markierungen gekennzeichnet werden, die entsprechend in Deckung sind, wenn die entsprechende Position eingestellt ist. Ebenso kann auch eine haptische Markierung vorgesehen sein, indem beispielsweise bei einer Drehbetätigung elliptisch ausgestaltete Elemente nur in einer einstellbaren Stellung in Deckung sind und in anderen einstellbaren Positionen gegeneinander verdreht sind.

Bei der Ausgestaltung nach Anspruch 6 weist der Steckanschluss bzw. das Zuführanschlussteil ein lösbares Sicherungsblockademittel auf, das in seinem ungelösten Zustand das Betätigungselement blockiert hinsichtlich einer Drehbewegung von der Zwischenposition in die zweite Position.

Dadurch lässt sich vorteilhaft erreichen, dass ein vorschnelles Drehen des Betätigungselementes aus der Zwischenposition heraus vermieden wird, wenn u.U. noch ein Überdruck in der Versorgungsleitung zum Verbraucher besteht.

Durch das Sicherungsblockademittel muss der Benutzer zunächst dieses Sicherungsblockademittel in einen gelösten Zustand bringen, um dann das Betätigungselement von der Zwischenposition in die zweite Position bringen zu können. Der Benutzer muss also im Sinne einer bewussten Betätigung zunächst dieses Sicherungsblockademittel lösen, um dann das Gegenanschlussteil mechanisch von dem Zuführanschlussteil lösen zu können.

Bei der Ausgestaltung nach Anspruch 7 wird das Sicherungsblockademittel federelastisch im ungelösten Zustand gehalten. Weiterhin ist das Sicherungsblockademittel entgegen der Federkraft in den gelösten Zustand bringbar.

Das Sicherungsblockademittel kann beispielsweise aus einem Knopf oder einen ähnlichen Formkörper bestehen, der in Folge der Federkraft aus einer Kontur herausragt und damit eine (Dreh-)Bewegung des Betätigungselementes über dieses Sicherungsblockademittel hinweg verhindert.

Das Sicherungsblockademittel kann in den gelösten Zustand gebracht werden, indem der Formkörper entgegen der Federkraft in die Kontur hineingedrückt wird. Das Betätigungselement kann dann über das Sicherungsblockademittel hinweg aus der Zwischenposition in die zweite Position gedreht werden.

Dazu kann der Formkörper direkt nach unten gedrückt werden. Es ist auch möglich, ein Betätigungselement - beispielsweise in Form eines Hebels - vorzusehen, durch dessen Betätigung das Sicherungsblockademittel in die gelöste Position gedrückt werden kann.

Bei der Ausgestaltung nach Anspruch 8 ist das Sicherungsblockademittel und/oder eine korrespondierende Gegenfläche des Betätigungselements so geformt, dass das Sicherungsblockademittel durch das Betätigungselement bei dessen Drehbewegung von der zweiten Position in die Zwischenposition entgegen der Federkraft in den gelösten Zustand gebracht wird, wobei das Sicherungsblockademittel bei Erreichen der Zwischenposition wiederum im ungelösten Zustand ist.

Dies kann beispielsweise erreicht werden, indem der Formkörper des Sicherungsblockademittels in dem Bereich, der aus der Kontur herausragt nach Art eines Sägezahns geformt ist. Beim Übergang von der zweiten Position in die Zwischenposition gleitet das Betätigungselement über die Schräge des Sägezahns hinweg und drückt dabei das Sicherungsblockademittel in die gelöste Position. Zumindest bei Erreichen der Zwischenposition hat das Betätigungselement das Sicherungsblockademittel vollständig überfahren. Bei einer entgegengesetzten Drehbewegung des Betätigungselementes aus der Zwischenposition heraus in Richtung der zweiten Position steht dieser Drehbewegung die senkrechte Flanke des Sägezahns entgegen. Das Betätigungselement wird an dieser senkrechten Flanke in Form eines Anschlags gehalten. Eine Bewegung aus der Zwischenposition in die zweite Position ist dann nur möglich, wenn das Sicherungsblockademittel mit einer eigenständigen Betätigung in den gelösten Zustand gebracht wird.

Dabei erweist es sich weiterhin als vorteilhaft, wenn das Betätigungselement zwischen der Zwischenposition und der ersten Position hin- und her gedreht werden kann, ohne dass diese Drehbewegung durch das Sicherungsblockademittel behindert wird. Dazu kann das Betätigungselement einen entsprechenden Ausschnitt aufweisen, so dass das Sicherungsblockademittel bei einer Drehbewegung zwischen der Zwischenposition und der ersten Position (sowie umgekehrt) "überfahren" wird, ohne die Drehbewegung zu stören. Erst bei Erreichen der Zwischenposition aus der ersten Position heraus wirkt das Sicherungsblockademittel als Anschlag, der ein weiteres Drehen in Richtung der zweiten Position verhindert.

Vorteilhaft wird durch die verschiedenen Ausgestaltungen nach den Ansprüchen 6 bis 8 erreicht, dass es für den Benutzer eindeutig erkennbar ist, wenn das Gegenanschlussteil aus der mechanisch gesicherten Position herausgedreht wird.

Ein Ausführungsbeispiel der Erfindung ist in der Zeichnung dargestellt. Es zeigt dabei im Einzelnen:
- Fig. 1:: ein Zuführanschlussteil nach der vorliegenden Erfindung,
- Fig. 2:: eine Darstellung der Führung des Betätigungselementes,
- Fig. 3:: eine Darstellung der Kanäle zur Entlüftung in der Zwischenposition,
- Fig. 4:: ein Zuführanschlussteil mit einem Sicherungsblockademittel in einer ersten Ansicht und
- Fig. 5:: ein Zuführanschlussteil mit einem Sicherungsblockademittel in einer weiteren Ansicht.

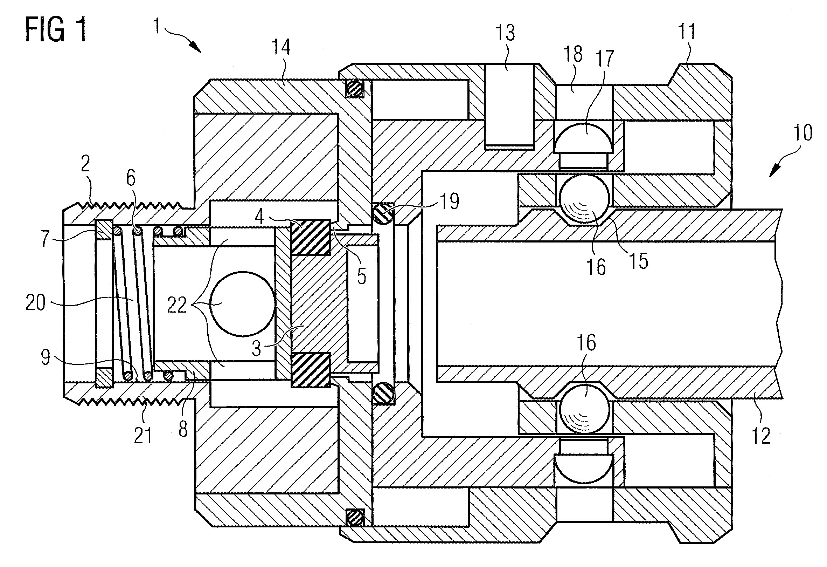

Figur 1 zeigt ein Zuführanschlussteil 1 nach der vorliegenden Erfindung. Dieses Zuführanschlussteil 1 kann als Abschlussstück auf ein Ende einer pneumatischen Versorgungsleitung dichtend aufgeschraubt werden. Dies erfolgt in dem in Figur 1 gezeigten Ausführungsbeispiel mit einem Außengewinde an dem Anschluss 2.

Das Zuführanschlussteil 1 weist im Weiteren ein Innenteil auf, das einen ersten Innenraum 20 aufweist. Dieser erste Innenraum 20 ist durch eine Abschlusswand 21 abgeschlossen. Weiterhin weist dieser erste Innenraum 20 noch Durchgangskanäle 22 durch die äußere Wand des ersten Innenraums 20 auf.

Das Zuführanschlussteil 1 weist ein Rückschlagventil auf, das aus einem Block 3 besteht. An diesem Block 3 ist ein Dichtelement 4 angebracht, das in der abdichtenden Stellung abdichtend auf einen Gegenanschlag 5 aufgedrückt wird. Dieses Aufdrücken erfolgt zum einen durch einen Überdruck, der von der Eingangsseite des Zuführanschlussteils 1 ansteht. Außerdem wird der Block 3 noch durch die Feder 6 in diese abdichtende Position gedrückt. Diese Feder stützt sich an dem Teil 7 des Zuführanschlussteils 1 ab und drückt den Block 3 in die abdichtende Stellung. Außerdem ist zu sehen, dass der Block 3 des Rückschlagventils durch die Führung 8 geführt ist, die entlang der Innenflächen 9 auf der Eingangsseite des Zuführanschlussteils 1 gleitet.

Durch ein Schließen des Rückschlagventils ist der Zuführanschluss 1 gegen ein Entweichen des gasförmigen Mediums dichtend abgeschlossen.

Weiterhin ist zu sehen, dass auf der dem Anschluss 2 entgegen gesetzten Seite des Zuführanschlussteils 1 eine Aufnahmeöffnung 10 vorhanden ist, in die ein Gegenanschlussteil 12 eingesetzt werden kann. Dieses Gegenanschlussteil 12 kann beispielsweise ein Stecker eines pneumatischen Verbrauchers sein.

Das Zuführanschlussteil 1 weist weiterhin ein Betätigungselement 11 auf. Dieses Betätigungselement 11 wird in dem dargestellten Ausführungsbeispiel mittels eines Führungsstiftes 13 in einem Führungsspalt des Gehäuses 14 des Zuführanschlussteils 1 geführt. Dieser Führungsspalt kann beispielsweise im Wesentlichen in Form einer Schraubenlinie auf dem Außenumfang des Gehäuses 14 des Zuführanschlussteils 1 geführt sein. Die Form des Führungsspaltes wird nachfolgend noch erörtert.

In der Darstellung der Figur 1 ist zu sehen, dass das Gegenanschlussteil 12 an seinem vorderen Ende eine Nut 15 aufweist, in die Blockademittel 16 des Zuführanschlussteils 1 eingreifen. Diese Blockademittel 16 des Zuführanschlussteils 1 sind Kugeln, die in der in Figur 1 gezeigten Position des Betätigungselementes 11 entgegen einer federelastischen Lagerung 17 ausrückbar sind. Dabei können die federelastischen Lagerelemente 17 nach außen ausweichen in die dargestellten Freiräume 18.

In dieser in Figur 1 gezeigten Stellung kann das Gegenanschlussteil 12 eingesetzt bzw. entnommen werden.

Nach dem Einsetzen eines Gegenanschlussteils 12 wird das Betätigungselement 11 gedreht. Dadurch wird der Freiraum 18 von der federelastischen Lagerung 17 weg gedreht. Dadurch stützt sich dann nach dieser Verdrehung die federelastische Lagerung 17 an einem geschlossenen Teil des Betätigungselementes 11 ab. Die Blockademittel 16 können dann nicht mehr ausrücken, so dass das Gegenanschlussteil 12 dann sicher und blockiert in dem Zuführanschlussteil 1 gehalten wird.

Bei einer Bewegung des Betätigungselementes 11 wird außerdem das Gegenanschlussteil 12 in der Zeichnung nach links bewegt. Es ist zu sehen, dass das Gegenanschlussteil 12 dann bei der weiteren Bewegung zum einen dichtend an dem Dichtelement 19 anliegt. Außerdem drückt das Gegenanschlussteil 12 den Block 3 des Rückschlagventils in eine geöffnete Position. In dieser geöffneten Position kann - beispielsweise Druckluft - über das Zuführanschlussteil 1 in das Rohr des Gegenanschlussteils 12 gefördert werden und damit dann einen pneumatischen Verbraucher versorgen.

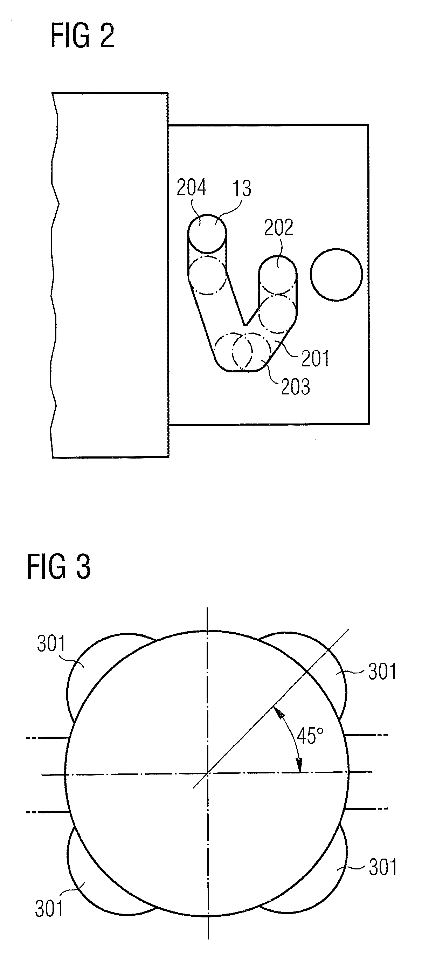

Figur 2 zeigt eine Draufsicht auf das Zuführanschlussteil 1, bei der der Führungsspalt 201 in dem Gehäuse 14 des Zuführanschlussteils 1 zu sehen ist. Es ist ebenfalls der Führungsstift 13 des Betätigungselementes 11 dargestellt, der in dem Führungsspalt 201 geführt wird.

In dem Führungsspalt 201 sind die erste Position mit der Bezugsziffer 204 markiert, die Zwischenposition mit der Bezugsziffer 203 und die zweite Position mit der Bezugsziffer 202.

Durch eine Drehung des Betätigungselementes 11 wird das Betätigungselement 11 durch den Führungsstift 13 entsprechend dessen Bewegung in dem Führungsspalt 201 zwangsgeführt. Das bedeutet, dass das Betätigungselement 11 in Folge der Drehung auch in der Zeichnungsebene von links nach rechts (und umgekehrt) bewegt wird, wenn das Betätigungselement 11 entsprechend gedreht wird.

Es ist zu sehen, dass in der zweiten Position, der Zwischenposition sowie der ersten Position das Betätigungselement 11 jeweils drehbar ist. Ohne dass dies in der Zeichnungsebene von links nach rechts (oder umgekehrt) bewegt wird. Erst wenn das Betätigungselement 11 aus der jeweiligen Position herausgedreht ist, ergibt sich durch den schraubenlinienförmigen Verlauf des Führungsspaltes 201 eine Bewegung des Betätigungselementes 11 in der Richtung von links nach rechts (oder umgekehrt).

Es ist weiterhin zu sehen, dass die Zwischenposition 203 für das Betätigungselement 11 einen Anschlag darstellt. Ausgehend von der zweiten Position 202 sowie von der ersten Position 204 erfolgt der Übergang in die Zwischenposition 203 jeweils durch eine Drehung mit entgegengesetzter Drehrichtung.

Dies hat den Vorteil, dass bei Erreichen der Zwischenposition der Führungsstift 13 an einen Anschlag anstößt und damit ein Weiterdrehen in der bisherigen Drehrichtung nicht mehr möglich ist. Dadurch wird vorteilhaft erreicht, dass ein "Überdrehen" der Zwischenposition, ohne dass ein Abbau des Überdrucks erfolgt wäre, vermieden werden kann.

Außerdem ist durch die Umkehr der Drehrichtungen für den Benutzer gut spürbar, aus welcher Position heraus und in Richtung welcher Position das Betätigungselement gerade gedreht wird.

Es hat sich als vorteilhaft erwiesen, für die Steigung des Führungsspaltes 201 in den entsprechenden Bereichen eine Steigung von ca. 18 Grad vorzusehen.

Es ist weiterhin zu sehen, dass der Führungsspalt 201 hinsichtlich der ersten Position 204 und der zweiten Position 202 so verläuft, dass die Längsrichtung des Führungsspalts 201 senkrecht zur Drehachse orientiert ist. Dies bedeutet, dass der Führungsstift 13 und damit das Betätigungselement 11 dort metastabil gelagert sind.

Figur 3 zeigt ein Ausführungsbeispiel zur Realisierung der Entlüftung der Verbindungsleitung von dem Steckanschluss zum Verbraucher in der Zwischenposition. Wie beschrieben, soll in der Zwischenposition die Anschlussleitung vom Steckanschluss zum pneumatischen Verbraucher mit der umgebenden Atmosphäre verbunden sein. Dazu ist vorgesehen, dass in dem Zuführanschlussteil 1 auf der Seite 10, in die das Gegenanschlussteil 12 eingeführt wird, Entlüftungskanäle 301 vorgesehen sind.

Figur 3 zeigt eine Draufsicht in Einführungsrichtung des Gegenanschlussteils 12 in das Zuführanschlussteil 1. Dort sind die Entlüftungskanäle 301 zu sehen. Durch eine geeignete Bemessung dieser Entlüftungskanäle kann der Überdruck ausreichend schnell abgebaut werden. Außerdem ist für den Benutzer durch den Luftzug spürbar sowie durch das Strömungsgeräusch - abhängig von der Umgebungslautstärke - auch hörbar, ob der Überdruck bereits abgebaut ist.

In der Zwischenposition ist das Gegenanschlussteil 12 bereits so weit aus dem Zuführanschlussteil 1 herausgezogen, dass das Gegenanschlussteil 12 nicht mehr durch das Dichtelement 19 abgedichtet. Der Block 3 des Zuführanschlussteils liegt an seinem Anschlag in abgedichteter Weise auf. Damit ist das Zuführanschlussteil 1 geschlossen. Das Gegenanschlussteil 12 und damit auch der daran angeschlossene Verbraucher (mit der zuführenden Versorgungsleitung) sind dann gegenüber der Atmosphäre geöffnet. Das Gegenanschlussteil 12 wird nicht mehr durch das Dichtelement 19 abgedichtet. Damit kann der Überdruck in dem angeschlossenen Verbraucher sowie der zuführenden Versorgungsleitung abgebaut werden, indem die Luft am vorderen Ende aus dem Gegenanschlussteil 12 herausströmt und außen an dem Gegenanschlussteil 12 vorbei entweicht. Vorteilhaft wird dies durch die in Figur 3 dargestellten Entlüftungskanäle 301 unterstützt. Diese Stellung stellt die Zwischenposition dar. In dieser Zwischenposition ist das Gegenanschlussteil 12 nach wie vor mechanisch gesichert in dem Zuführanschlussteil 1 gehalten. Das bedeutet in dem Beispiel der Figur 1, dass das Betätigungselement 11 noch nicht so weit gedreht ist, dass die Freiräume 18 über den federelastischen Lagerelementen 17 positioniert sind. Damit können die federelastischen Lagerelemente 17 nicht ausweichen und halten die Blockademittel 16 des Zuführanschlussteils 1 in der Position, in der das Gegenanschlussteil 12 gegen ein Entnehmen mechanisch gesichert ist.

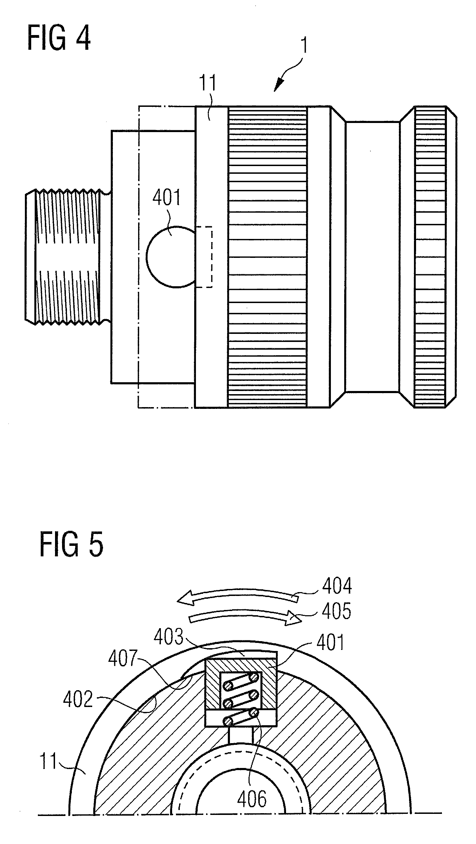

Figur 4 zeigt ein Zuführanschlussteil 1 mit einem Sicherungsblockademittel 401. Es ist weiterhin das Betätigungselement 11 des Zuführanschlussteils 1 zu sehen. In der Darstellung der Figur 4 ist das Betätigungselement 11 in der Zwischenposition zu sehen. Das Sicherungsblockademittel 401 ist in seinem ungelösten Zustand und verhindert ein Drehen des Betätigungselementes 11 aus der Zwischenposition in die zweite Position.

Figur 5 zeigt die Ansicht der Figur 4 in einem senkrechten Schnitt quer zur Längsachse der Drehbewegung des Betätigungselementes 11 durch das Sicherungsblockademittel 401.

Es ist zu sehen, dass zu dem Sicherungsblockademittel 401 in der Gegenfläche 402 des Betätigungselements 11 eine Ausnehmung 403 vorhanden ist. In dieser Ausnehmung 403 ist das Sicherungsblockademittel 401 in seinem ungelösten Zustand eingerückt und verhindert ein Drehen des Betätigungselements 11 in der Pfeilrichtung 404 nach links (d.h. aus der Zwischenposition in die zweite Position). Wird das Betätigungselement 401 aus der Zwischenposition in die erste Position gedreht (in der Pfeilrichtung 405 nach rechts), wird das Sicherungsblockademittel 401 entgegen der Federkraft 406 nach unten unter die Kontur 407 gedrückt. Das Sicherungsblockademittel 401 bleibt dann nach unten gedrückt, bis das Betätigungselement 11 wieder in die Zwischenposition gedreht wird. Das Sicherungsblockademittel 401 rückt dann wieder aus in den ungelösten Zustand und verhindert ein Weiterdrehen des Betätigungselementes 11 in die zweite Position.

## Patentansprüche

1. Zuführanschlussteil (1), wobei das Zuführanschlussteil (1) Verbindungsmittel (2) aufweist zur Verbindung des Zuführanschlussteils (1) mit einer Zuführvorrichtung für gasförmige Medien, wobei das Zuführanschlussteil (1) ein Rückschlagventil (3, 4, 6, 8) aufweist, durch das das Zuführanschlussteil (1) gegen ein Entweichen eines gasförmigen Mediums aus dem Zuführanschlussteil (1) abdichtend schließbar ist, wobei das Zuführanschlussteil (1) Aufnahmemittel aufweist zur Aufnahme eines Gegenanschlussteils (12), wobei dem Zuführanschlussteil (1) ein Betätigungselement (11) zugeordnet ist, wobei in einer ersten Position (204) des Betätigungselementes (11) Blockademittel (16) der Aufnahmemittel des Zuführanschlussteils (1) ein mechanisches Lösen eines in die Aufnahmemittel eingesetzten Gegenanschlussteils (12) verhindern, wobei in dieser ersten Position (204) das Rückschlagventil (3, 4, 6, 8) durch das Gegenanschlussteil (12) entgegen der Federkraft (6) des Rückschlagventils (3, 4, 6, 8) sowie entgegen dem in dem Zuführanschlussteil (1) anstehenden Druck des gasförmigen Mediums geöffnet ist, wobei in einer zweiten Position (202) die Blockademittel (16) der Aufnahmemittel gelöst sind (17, 18), wobei das Betätigungselement (11) beim Übergang von der ersten Position (204) in die zweite Position (202) in Form einer Drehbewegung betätigbar ist, und das wenigstens eine Betätigungselement (11) eine Zwischenposition (203) aufweist, in der das Rückschlagventil (3, 4, 6, 8) geschlossen ist, wobei in dieser Zwischenposition (203) weiterhin die Blockademittel (16) der Aufnahmemittel des Zuführanschlussteils (1) ein mechanisches Lösen eines in die Aufnahmemittel eingesetzten Gegenanschlussteils (12) verhindern und in der ein in die Aufnahmemittel eingesetztes Gegenanschlussteil (12) mit der umgebenden Atmosphäre verbundene ist, **dadurch gekennzeichnet, dass** durch diese Drehbewegung des Betätigungselementes (11) in Form einer Zwangsführung das Gegenanschlussteil (12) bewegt wird.

2. Steckanschluss bestehend aus einem Zuführanschlussteil nach Anspruch 1 und einem Gegenanschlussteil (12), **dadurch gekennzeichnet, dass** das Zuführanschlussteil (1) mit dem kompatiblen Gegenanschlussteil (12) den Steckanschluss bildet, wobei das Zuführanschlussteil (1) und das Gegenanschlussteil (12) zur Ausbildung des Steckanschlusses miteinander verbindbar sind, wobei in der ersten Position (204) das Zuführanschlussteil (1) und das kompatible Gegenanschlussteil (12) form- und/oder kraftschlüssig (15, 16) miteinander verbunden sind, wobei in der zweiten Position (202) das Rückschlagventil (3, 4, 6, 8) und damit der Zuführanschluss (1) des gasförmigen Mediums gesperrt ist und weiterhin das Gegenanschlussteil (12) von dem Zuführanschlussteil (1) gelöst ist, wobei das Rückschlagventil (3, 4, 6, 8) beim Einführen des Gegenanschlussteils (12) in das Zuführanschlussteil (1) aus der geschlossenen Stellung in die geöffnete Stellung gebracht wird, wobei das Betätigungselement (11) derart geführt ist (13, 201), dass nach dem Einführen des Gegenanschlussteils (12) in das Zuführanschlussteil (1) das Betätigungselement (11) in einer Drehbewegung des Betätigungselementes (11) das Gegenschlussteil (12) weiterführt in Richtung einer Öffnung des Steckanschlusses, wobei auch bei dieser Drehbewegung die Zwischenposition (203) zwischen der ersten Position (204) und der zweiten Position (202) vorhanden ist, in der der Zuführanschluss des gasförmigen Mediums gesperrt ist und in der das Gegenanschlussteil (12) gegenüber der umgebenden Atmosphäre geöffnet ist, wobei das Zuführanschlussteil (1) und das Gegenanschlussteil (12) in dieser Zwischenposition form- und/oder kraftschlüssig (15, 16) miteinander verbunden sind.

3. Zuführanschlussteil bzw. Steckanschluss nach Anspruch 1 oder 2, **dadurch gekennzeichnet, dass** die Drehrichtung der Drehbewegung des Betätigungselementes (11) von der ersten Position (204) zur Zwischenposition (203) unterschiedlich ist zur Drehrichtung der Drehbewegung des Betätigungselementes (11) von der Zwischenposition (203) zur zweiten Position (202).

4. Zuführanschlussteil bzw. Steckanschluss nach Anspruch 3, **dadurch gekennzeichnet, dass** das Betätigungselement (11) in der ersten Position (204), der Zwischenposition (203) und/oder der zweiten Position (202) metastabil gehalten wird.

5. Zuführanschlussteil bzw. Steckanschluss nach Anspruch 4, **dadurch gekennzeichnet, dass** das Betätigungselement (11) in der ersten Position (204), der Zwischenposition (203) und/oder der zweiten Position (202) formschlüssig gehalten wird.

6. Zuführanschlussteil bzw. Steckanschluss nach einem der Ansprüche 1 bis 5, **dadurch gekennzeichnet, dass** ein lösbares Sicherungsblockademittel (401) vorhanden ist, das in seinem ungelösten Zustand das Betätigungselement (11) blockiert hinsichtlich einer Drehbewegung von der Zwischenposition (203) in die zweite Position (201).

7. Zuführanschlussteil bzw. Steckanschluss nach Anspruch 6, **dadurch gekennzeichnet, dass** das Sicherungsblockademittel (401) federelastisch (406) im ungelösten Zustand gehalten wird und entgegen der Federkraft (406) in den gelösten Zustand bringbar ist.

8. Zuführanschlussteil bzw. Steckanschluss nach Anspruch 7, **dadurch gekennzeichnet, dass** das Sicherungsblockademittel (401) und/oder eine korrespondierende Gegenfläche (402, 403) des Betätigungselements (11) so geformt ist, dass das Sicherungsblockademittel (401) durch das Betätigungselement (11) bei dessen Drehbewegung von der zweiten Position (201) in die Zwischenposition (203) entgegen der Federkraft (406) in den gelösten Zustand gebracht wird, wobei das Sicherungsblockademittel (401) bei Erreichen der Zwischenposition (203) wiederum im ungelösten Zustand ist.

## Claims

1. Supply connector part (1), said supply connector part (1) having connection means (2) for connecting the supply connector part (1) with a supply device for gaseous media, the supply connector part (1) having a non-return valve (3, 4, 6, 8) by means of which the supply connector part (1) can be closed off tightly against leakage of gaseous medium out of the supply connector part (1), the supply connector part (1) having receiving means for receiving a mating connector part (12), the supply connector part (1) having an actuating element (11) assigned to it, in a first position (204) of which blocking means (16) of the receiving means of the supply connector part (1) prevent mechanical disengagement of a mating connector part (12) plugged into the receiving means, in this first position (204) the non-return valve (3, 4, 6, 8) being held open, against the spring force (6) of the non-return valve (3, 4, 6, 8) and against the gaseous-medium pressure prevailing in the supply connector part (1), and, in a second position (202), the blocking means (16) of the receiving means being released (17, 18),
the actuating element (11) being actuatable during the transition from the first position (204) into the second position (202) by means of a rotary movement, and the at least one actuating element (11) having an intermediate position (203) in which the non-return valve (3, 4, 6, 8) is closed, in which the blocking means (16) of the receiving means of the supply connector part (1) continues to prevent mechanical disengagement of a mating connector part (12) plugged into the receiving means and in which a mating connector part (12) plugged into the receiving means is open to the surrounding atmosphere,
**characterised in that** the mating connector part (12) is moved by this rotary movement of the actuating element (11) in a restricted guidance system.

2. Plug connection consisting of a supply connector part according to claim 1 and a mating connector part (12),
**characterised in that** the supply connector part (1) and the compatible mating connector part (12) form the plug connection, the supply connector part (1) and the mating connector part (12) being interconnectable in order to form said plug connection, the supply connector part (1) and the compatible mating connector part (12) being connected with each other positively or non-positively (15, 16) in the first position (204) and, in the second position (202), the non-return valve (3, 4, 6, 8) and consequently the supply connector (1) for the gaseous medium being blocked and the mating connector part (12) being disengaged from the supply connector part (1), the non-return valve (3, 4, 6, 8) being moved from the closed to the open position when the mating connector part (12) is plugged into the supply connector part (1), the actuating element (11) being guided in such a manner (13, 201) that, after the mating connector part (12) has been inserted into the supply connector part (1), the mating connector part (12) is guided further in the direction of opening the plug connection by a rotary movement of the actuating element (11), whereby the intermediate position (203) between the first position (204) and the second position (202) existing in this rotary movement, too; in this intermediate position the supply connector part for the gaseous medium is blocked and the mating connector part (12) is open to the surrounding atmosphere, the supply connector part (1) and the mating connector part (12) being positively or non-positively (15, 16) interconnected in this intermediate position.

3. Supply connector part and/or plug connection according to either of claims I or 2,
**characterised in that** the rotary direction of the rotary movement of the actuating element (11) from the first position (204) to the intermediate position (203) differs from the rotary direction of the rotary movement of the actuating element (11) from the intermediate position (203) to the second position (202).

4. Supply connector part and/or plug connection according to claim 3,
**characterised in that** the actuating element (11) is held in a metastable manner in the first position (204), the intermediate position (203) and/or the second position (202).

5. Supply connector part and/or plug connection according to claim 4,
**characterised in that** the actuating element (11) is held in form-fitting manner in the first position (204), the intermediate position (203) and/or the second position (202).

6. Supply connector part and/or plug connection according to any one of the claims 1 to 5,
**characterised in that** a releasable safety-blocking means (401) is provided, which, in its non-released state, prevents the actuating element (11) from rotating from the intermediate position (203) into the second position (201).

7. Supply connector part and/or plug connection according to claim 6,
**characterised in that** the safety-blocking means (401) is held spring-elastically (406) in the non-released state and can be moved into the released state against the spring force (406).

8. Supply connector part and/or plug connection according to claim 7,
**characterised in that** the safety-blocking means (401) and/or a corresponding opposing surface (402, 403) of the actuating element (11) is shaped such that the safety-blocking means (401) is moved into the released state, against the spring force (406), by the actuating element (11) during its rotary movement from the second position (201) into the intermediate position (203), the safety-blocking means (401) being in the non-released state again on reaching the intermediate position (203).

## Revendications

1. Pièce de raccordement d'alimentation (1), la pièce de raccordement d'alimentation (1) comprenant des moyens de liaison (2) pour relier la pièce de raccordement d'alimentation (1) à un dispositif d'alimentation pour milieux gazeux, la pièce de raccordement d'alimentation (1) comprenant un clapet antiretour (3, 4, 6, 8) permettant de fermer de manière étanche la pièce de raccordement d'alimentation (1) pour empêcher un milieu gazeux de s'échapper de la pièce de raccordement d'alimentation (1), la pièce de raccordement d'alimentation (1) comprenant des moyens de réception pour recevoir une pièce de raccordement complémentaire (12), un élément d'actionnement (11) étant associé à la pièce de raccordement d'alimentation (1), des moyens de blocage (16) des moyens de réception de la pièce de raccordement d'alimentation (1) empêchant, dans une première position (204) de l'élément d'actionnement (11), un détachement mécanique d'une pièce de raccordement complémentaire (12) insérée dans les moyens de réception, le clapet antiretour (3, 4, 6, 8), dans cette première position (204), étant ouvert par la pièce de raccordement complémentaire (12) à l'encontre de la force ressort (6) du clapet antiretour (3, 4, 6, 8) et à l'encontre de la pression du milieu gazeux régnant dans la pièce de raccordement d'alimentation (1), les moyens de blocage (16) des moyens de réception, dans une deuxième position (202), étant débloqués (17, 18), l'élément d'actionnement (11), lors du passage de la première position (204) à la deuxième position (202), pouvant être actionné sous forme d'un mouvement de rotation, et le au moins un élément d'actionnement (11) présentant une position intermédiaire (203) dans laquelle le clapet antiretour (3, 4, 6, 8) est fermé, les moyens de blocage (16) des moyens de réception de la pièce de raccordement d'alimentation (1), dans cette position intermédiaire, empêchant encore un détachement mécanique d'une pièce de raccordement complémentaire (12) insérée dans les moyens de réception, et dans laquelle position intermédiaire, une pièce de raccordement complémentaire (12) insérée dans les moyens de réception est reliée à l'atmosphère ambiante,
**caractérisée en ce que** ce mouvement de rotation de l'élément d'actionnement (11) provoque le déplacement de la pièce de raccordement complémentaire (12) sous forme d'un guidage forcé.

2. Raccordement enfichable constitué d'une pièce de raccordement d'alimentation selon la revendication 1 et d'une pièce de raccordement complémentaire (12), **caractérisé en ce que** la pièce de raccordement d'alimentation (1) forme avec la pièce de raccordement complémentaire (12) compatible le raccordement enfichable, la pièce de raccordement d'alimentation (1) et la pièce de raccordement complémentaire (12) pouvant être reliées entre elles pour former le raccordement enfichable, la pièce de raccordement d'alimentation (1) et la pièce de raccordement complémentaire (12) compatible, dans la première position (204), étant reliées l'une à l'autre par coopération de formes et/ou à force (15, 16), le clapet antiretour (3, 4, 6, 8) et donc le raccordement d'alimentation (1) du milieu gazeux, dans la deuxième position, étant formés et la pièce de raccordement complémentaire (12) étant encore débloquée de la pièce de raccordement d'alimentation (1), le clapet antiretour (3, 4, 6, 8), lors de l'introduction de la pièce de raccordement complémentaire (12) dans la pièce de raccordement d'alimentation (1), étant amené de la position formée à la position ouverte, l'élément d'actionnement (1) étant guidé (13, 201) de telle manière qu'après introduction de la pièce de raccordement complémentaire (12) dans la pièce de raccordement d'alimentation (1), l'élément d'actionnement (11), dans un mouvement de rotation de l'élément d'actionnement (11), continue de guider la pièce de raccordement complémentaire (12) en direction d'une ouverture du raccordement enfichable, la position intermédiaire (203) étant également présente entre la première position (204) et la deuxième position (202) lors de ce mouvement de rotation, position intermédiaire dans laquelle le raccordement d'alimentation du milieu gazeux est fermé, et dans laquelle la pièce de raccordement complémentaire (12) est ouverte sur l'atmosphère ambiante, la pièce de raccordement d'alimentation (1) et la pièce de raccordement complémentaire (12) étant reliées l'une à l'autre par coopération de formes et/ou à force (15, 16) dans cette position intermédiaire.

3. Pièce de raccordement d'alimentation ou raccordement enfichable selon la revendication 1 ou 2, **caractérisé en ce que** le sens de rotation du mouvement de rotation de l'élément d'actionnement (11) de la première position (204) à la position intermédiaire (203) est différent du sens de rotation du mouvement de rotation de l'élément d'actionnement (11) de la position intermédiaire (203) à la deuxième position (202).

4. Pièce de raccordement d'alimentation ou raccordement enfichable selon la revendication 3, **caractérisé en ce que** l'élément d'actionnement (11) est maintenu de façon métastable dans la première position (204), la position intermédiaire (203) et/ou la deuxième position (202).

5. Pièce de raccordement d'alimentation ou raccordement enfichable selon la revendication 4, **caractérisé en ce que** l'élément d'actionnement (11) est maintenu par coopération de formes dans la première position (204), la position intermédiaire (203) et/ou la deuxième position (202).

6. Pièce de raccordement d'alimentation ou raccordement enfichable selon l'une des revendications 1 à 5, **caractérisé en ce que** des moyens de blocage de sécurité (401) pouvant être débloqués sont présents, lesquels, dans leur état bloqué, empêchent l'élément d'actionnement (11) d'effectuer un mouvement de rotation de la position intermédiaire (203) à la deuxième position (201).

7. Pièce de raccordement d'alimentation ou raccordement enfichable selon la revendication 6, **caractérisé en ce que** les moyens de blocage de sécurité (401) sont maintenus dans l'état bloqué par effet de ressort (406) et peuvent être amenés dans l'état débloqué à l'encontre de la force ressort (406).

8. Pièce de raccordement d'alimentation ou raccordement enfichable selon la revendication 7, **caractérisé en ce que** les moyens de blocage de sécurité (401) et/ou une surface complémentaire (402, 403) correspondante de l'élément d'actionnement (11) sont formés de sorte que les moyens de blocage de sécurité (401) sont amenés dans l'état débloqué à l'encontre de la force ressort (406) par l'élément d'actionnement (11) lors du mouvement de rotation de ce dernier de la deuxième position (201) à la position intermédiaire (203), les moyens de blocage de sécurité (401) étant à nouveau dans l'état bloqué lorsque la position intermédiaire (203) est atteinte.
